# EUROPEAN PATENT SPECIFICATION

(11) **EP 0 751 418 B1**
(45) Date of publication and mention of the grant of the patent: **19.09.2001**
(21) Application number: 96107760.9
(22) Date of filing: 15.05.1996
(51) Int. Cl.: G03B 17/00, G03B 17/30

(54) **Camera with means for preventing closing of a cartridge light lock when a substantial length of filmstrip protrudes out of the cartridge**
Kamera mit einer Vorrichtung zum Sperren des Schliessmechanismus der Filmpatronen-Lichtsperre, wenn eine wesentliche Länge des Filmstreifens aus der Patrone hervorsteht
Appareil photo avec dispositif ppour éviter la fermeture de l'élément de blocage de la lumière d'une cartouche de film quand une importante longueur de film est située en dehors de la cartouche

(30) Priority: 29.06.1995 US 655; 06.12.1995 US 568214
(43) Date of publication of application: 02.01.1997
(73) Proprietor: EASTMAN KODAK COMPANY, Rochester, New York 14650-2201 (US)
(72) Inventor: Williams, Patricia Lynn, c/o Eastman Kodak Co., Rochester, New York 14650-2201 (US); Kuhn Jr.,Robert Louis , c/o Eastman Kodak Co., Rochester, New York 14650-2201 (US)
(74) Representative: Blickle, K. Werner, Dipl.-Ing.

(56) References cited:
- US-A- 4 149 793
- US-A- 5 231 438
- PATENT ABSTRACTS OF JAPAN vol. 004, no. 082 (P-015), 13 June 1980 & JP-A-55 046732 (RICOH CO LTD), 2 April 1980,

## Description

### FIELD OF THE INVENTION

The invention relates generally to the field of photography, and in particular to cameras. More specifically, the invention relates to a camera with means for preventing a cartridge light lock from moving from an open to a closed position when a filmstrip protrudes out of the cartridge.

### BACKGROUND OF THE INVENTION

U.S. Patent No. 5,231,438 (the '438 patent), issued in the name of Smart and assigned to the assignee of the present invention, discloses a camera to be used with a self opening cassette. The camera includes a chamber for receiving the cassette and a door pivotable between an open position, uncovering the chamber, and a closed position covering the chamber. The cassette includes a light valve movable between an open position, allowing a filmstrip to exit the cassette, and a closed position sealing the cassette in a light-tight manner. An interlock prevents the door from being opened when the light valve cannot be closed because a filmstrip is protruding out of the cassette. As such, images recorded on the filmstrip will not be ruined by exposure to ambient light due to a prematurely opened chamber door.

As described in the '438 patent in col. 8, lines 57-62, "the return spring 159 can only slightly pivot the second latch 135 because the control shaft 55 cannot be rotationally oriented with its light valve 57 in the closed position *since the filmstrip F is protruding from the cassette 1 to block the light valve."* In other words, the light valve cannot be moved to its closed position because it hits or contacts the film. Such contact between the film and the light valve is less than optimal. If a camera user attempts to force the light valve to a closed position with film protruding from the cassette, the resulting contact between the film and light valve can cause damage to the film (e.g. scratching), light valve (e.g. yielding or buckling) and/or other camera mechanisms.

### SUMMARY OF THE INVENTION

The present invention is directed to overcoming one or more of the problems set forth above. Briefly summarized, according to one aspect of the present invention, a camera as defined in claim 1, includes a chamber for receiving a cartridge having a light lock movable between an open position allowing a filmstrip to exit the cartridge and a closed position sealing the cartridge in a light-tight manner. The camera also includes means for moving the light lock between its open and closed positions. The camera comprises means for preventing the moving means from moving the light lock from the open position to the closed position when the filmstrip protrudes out of the cartridge as defined in claim 1.

By preventing the light lock from moving from its open position to its closed position when the filmstrip protrudes out of the cartridge, the light lock is prevented from closing on the filmstrip. As such, possible damage to the filmstrip and/or light lock is avoided.

These and other aspects, objects, features and advantages of the-present invention will be more clearly understood and appreciated from a review of the following detailed description of the preferred embodiments and appended claims, and by reference to the accompanying drawings.

### BRIEF DESCRIPTION OF THE DRAWINGS

FIG. 1 is an exploded view of a camera incorporating the present invention;
FIG. 2 is an end view of the camera of Fig. 1 looking along the direction of arrow A when film has not been thrust from a film cartridge; and
FIG. 3 is an end view of the camera of Fig. 1 looking along the direction of arrow A when film has been thrust from a film cartridge.

### DETAILED DESCRIPTION OF THE INVENTION

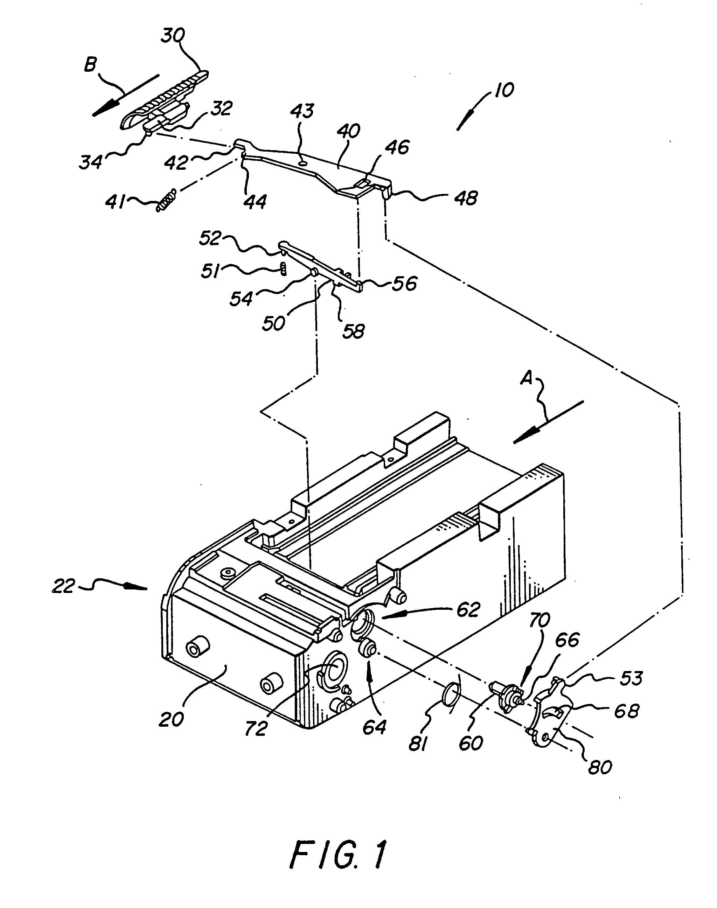

Beginning with FIG. 1, a camera 10 includes a body 20 defining a film chamber 22 which is designed to receive a thrust type film cartridge (not shown) such as the cartridge disclosed in the above-referenced '438 patent. The cartridge includes a light lock movable between an open position, allowing film to be thrust from the cartridge by rotating a film spool, and a closed position sealing the cartridge in a light-tight manner. A spring-loaded chamber door(not shown) is biased towards an open position and, when closed, seals chamber 22 in a light-tight manner. A manually operable door release (actuator) 30, for releasing the chamber door, has an arm 32 with a first pin 34 at one end of arm 32. First pin 34 engages a first pin engaging surface 42 of a lever (drive member) 40. Lever 40 is secured to camera body 20 for rotation about a pivot 43. Lever 40 rotates about an axis which is perpendicular to a direction of travel of the film as it exits the cartridge. A tension spring 41 is hooked at one end to hooked portion 44 of lever 40 and at the other end to camera body 20 to urge the lever 40 counterclockwise about pivot 43. Lever 40 includes an interlock aperture 46.

A film plane interlock (lock member) 50 is located immediately adjacent to the film chamber and an aperture of the film cartridge through which photographic film emerges to provide maximum security from unintentional exposure. Interlock 50 is mounted to camera body 20 for rotation about pivot 54. Interlock 50 rotates about an axis which is parallel to a direction of travel of the film as it exits the cartridge. Film plane interlock 50 includes an interlock pin 52 that captures a film plane interlock compression spring 51 whose other end engages the camera body. As such, the film plane interlock is urged clockwise from a film present (locked) position toward a no film present (unlocked) position. Film plane interlock 50 has at the opposite end from interlock pin 52 an interlock pawl 56 located to be moved into a path of movement of lever 40 into aperture 46 when film is protruding from the film cartridge (described further below). An interlock foot 58 is located part way between interlock pivot 54 and interlock pawl 56. Interlock foot 58 has a film engaging surface on its bottom side that is curved in shape. This shape allows film to easily engage interlock foot 58 without undue friction or blockage.

A light lock drive mechanism includes a light lock drive sector 80, a light lock yoke 60 and a sector spring 81. A pawl 48 located on the opposite end of lever 40 engages a lever engaging surface 53 on drive sector 80. Yoke 60 extends into chamber 22 via an aperture 62 to engage a cartridge light lock. Spring 81 is mounted about a post 64 to which drive sector 80 is rotatably mounted. Drive sector 80 is biased clockwise about post 64 by spring 81. A post 66 on yoke 60 extends into a slot 68 in drive sector 80. A pin (not shown) on a surface of drive sector 80 opposing yoke 60 rides in a slot 70 in yoke 60 to rotate yoke 60 as drive sector 80 rotates.

In operation, a camera user loads a film cartridge into chamber 22 and then closes the chamber door. Full closure of the chamber door releases a latch (not shown) allowing door release 30 to be moved in the direction of an arrow B, thereby securing the chamber door closed. Release 30 is moved by surface 42 pressing against pin 34 as lever 40 rotates counterclockwise under the influence of spring 41. Rotation of lever 40 allows drive sector 80 to rotate clockwise under the influence of spring 81. Rotation of drive sector 80 causes yoke 60 to rotate clockwise, thereby opening the cartridge light lock.

After the cartridge light lock has been moved to an open position, a camera drive spindle (not shown), which engages a cartridge spool via aperture 72, is rotated to turn the spool and thrust the film out of the cartridge. As the film exits the cartridge, a back surface of the film engages foot 58 causing interlock 50 to rotate counter clockwise against the force of spring 51. Such rotation of interlock 50 causes pawl 56 to extend into aperture 46, there by preventing lever 40 from rotating about pivot 43. As such, the camera operator cannot move release 30 in the direction opposite arrow B to close the cartridge light lock when film protrudes from the cartridge because lever 40 is locked against rotation.

After the last picture has been taken, the film is wound completely back into the cartridge. After the lead end of the filmstrip pass by foot 58, interlock 50 is rotated counter clockwise by spring 51, thereby withdrawing pawl 56 from aperture 46. Lever 40 is now free to rotate about pivot 43. The camera operator can now move release 30 in a direction opposite arrow B. Such movement causes lever 40 to rotate clockwise via the interaction of pin 34 and surface 42. Clockwise rotation of lever 40 rotates drive sector 80, and thus yoke 60, counterclockwise via interaction of pawl 48 and surface 53, thereby closing the cartridge light lock. Further movement of release 30 in the direction opposite arrow B releases the chamber door to open and actuates a cartridge ejector (not shown) to eject the film cartridge partially out of chamber 22.

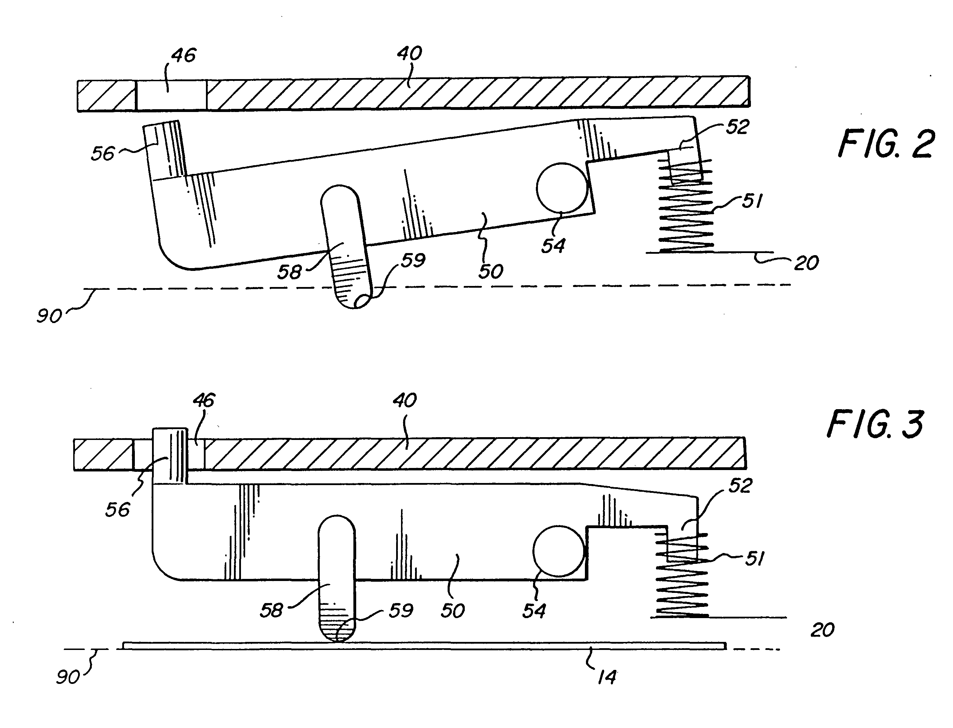

The operation of the film plane interlock will be described with reference to Figs. 2 and 3. The view shown in Figs. 2 and 3 is looking along the direction of arrow A (Fig. 1), such that film 14 (Fig. 3) would emerge from the plane of the paper as it is thrust from the film cartridge. The film plane interlock 50 is shown in a no film present or unlocked position in Fig. 2. When in the unlocked position, film plane interlock spring 51 pushes on one end of film plane interlock 50, causing film plane interlock 50 to pivot about interlock pivot 54 so that interlock foot 58 crosses film plane 90. Interlock pawl 56 does not engage interlock aperture 46 in lever 40.

FIG. 3 shows the film plane interlock in the locked or film present position. As the film 14 emerges from the film cartridge (out of the plane of the paper), the film 14 proceeds along the film plane 90 until it engages film engaging surface 59 of interlock foot 58. As film 14 continues to move out of the film cartridge, the film 14 pushes interlock foot 58 out of film plane 90. This motion causes film interlock 50 to rotate about interlock pivot 54 such that interlock pawl 56 engages interlock aperture 46 of lever 40. Lever 40 and door release 30 cannot move while interlock pawl 56 engages interlock aperture 46. Thus the cartridge light lock cannot be closed while film 14 protrudes from the film cartridge.

The invention has been described with reference to a preferred embodiment. However, it will be appreciated that variations and modifications can be effected by a person of ordinary skill in the art without departing from the scope of the invention.

### PARTS LIST

- 10: camera
- 14: film
- 20: body
- 22: film chamber
- 30: door release
- 32: arm
- 34: first pin
- 40: lever
- 41: lever spring
- 42: first pin engaging surface
- 43: lever pivot
- 44: first lever spring retainer
- 46: interlock aperture
- 48: pawl
- 50: film plane interlock
- 51: film plane interlock spring
- 52: interlock pin
- 53: lever engaging surface
- 54: interlock pivot
- 56: interlock pawl
- 58: incerlock foot
- 59: film engaging surface
- 60: yoke
- 62: aperture
- 64: post
- 66: post
- 68: slot
- 70: slot
- 72: aperture
- 80: drive sector
- 81: spring
- 90: film plane

## Claims

1. A camera comprising a chamber (22) for receiving a cartridge having a light lock movable between an open position allowing a filmstrip (14) to exit the cartridge and a closed position sealing the cartridge in a light-tight manner, and means (40,80) for moving said light lock between its open and closed positions, **characterized by**:
interlock means (50) responsive to said filmstsip (14) being present in a film plane (90) adjacent said chamber (22), for preventing said moving means (40) from moving said light lock from said open position to said closed position when said filmstrip protrudes out of said cartridge, thereby preventing said light lock from closing on the filmstrip and possibly damaging the film.

2. The camera of claim 1 wherein said moving means includes a light lock drive (80) for engaging and moving the light lock between the open and closed positions, a drive member (40) for engaging and moving the light lock drive (80) to move the light lock, and a manually operable actuator (30) for engaging and moving the drive member.

3. The camera of claim 2, wherein said interlock means (50) is engageable with said drive member (40) when said filmstrip protrudes out of said cartridge to limit movement of said drive member to prevent movement of the light lock from the open position to the closed position.

4. The camera of claim 3, wherein said interlock means (50) includes a lock member (59) which is contacted by said filmstrip protruding from said cartridge to move a portion (56) of said interlock means into an aperture (46) in said drive member (40) to limit movement of said drive member.

5. The camera of claim 3, wherein said drive member (40) is pivotable about an axis (43) which is perpendicular to a direction of travel of said protruding filmstrip.

6. The camera of claim 1, wherein said interlock means (50) includes a lock member (59) which is contacted by said filmstrip protruding from said cartridge to move a portion of said interlock means into a path of movement of said moving means (40) to limit movement of said moving means to prevent said light lock from moving from said open position to said closed position.

7. The camera of claim 6, wherein said interlock mans (50) is arranged to pivot about an axis (54) which is parallel to a direction of travel of said protruding filmstrip.

## Patentansprüche

1. Kamera mit einer Kammer (22) zum Aufnehmen einer Patrone, mit einer Lichtsperre, die von einer offenen Stellung, in der ein Filmstreifen (14) aus der Patrone austreten kann, in eine geschlossene Stellung bewegbar ist, in der die Patrone lichtdicht verschlossen ist, und mit Mitteln (40, 48) zum Bewegen der Lichtsperre von ihrer offenen in ihre geschlossene Stellung, **gekennzeichnet durch** eine Verriegelungseinrichtung (50), die darauf reagiert, ob der Filmstreifen (14) sich in einer Filmebene (90) der Kammer (22) benachbart befindet, um zu verhindern, dass das Bewegungsmittel (40) die Lichtsperre von ihrer offenen in ihre geschlossene Stellung bewegt, wenn der Filmstreifen aus der Patrone ragt, um dadurch zu verhindern, dass die Lichtsperre den Filmstreifen umschließt und den Film möglicherweise beschädigt.

2. Kamera nach Anspruch 1, **dadurch gekennzeichnet, dass** das Bewegungsmittel (40) eine Antriebsvorrichtung (80) aufweist, die in Eingriff mit der Lichtsperre bringbar ist und diese von ihrer offenen in ihre geschlossene Stellung bewegt, ein Antriebselement (40) umfasst, das in Eingriff mit der Antriebsvorrichtung (80) bringbar ist und sie derart bewegt, dass sie die Lichtsperre bewegt, und mit einer manuell bedienbaren Betätigungsvorrichtung (30) versehen ist, die in Eingriff mit dem Antriebselement bringbar ist und dieses bewegt.

3. Kamera nach Anspruch 2, **dadurch gekennzeichnet, dass** die Verriegelungseinrichtung (50) mit dem Antriebselement (40) in Eingriff bringbar ist, wenn der Filmstreifen aus der Patrone ragt, um die Bewegung des Antriebselements einzuschränken und eine Bewegung der Lichtsperre von ihrer offenen in ihre geschlossene Stellung zu verhindern.

4. Kamera nach Anspruch 3, **dadurch gekennzeichnet, dass** die Verriegelungseinrichtung (50) einen Riegel (59) aufweist, mit dem der aus der Patrone ragende Filmstreifen in Berührung bringbar ist, um einen Abschnitt (56) der Verriegelungseinrichtung in eine Öffnung (46) des Antriebselements (40) zu bewegen und dessen Bewegung einzuschränken.

5. Kamera nach Anspruch 3, **dadurch gekennzeichnet, dass** das Antriebselement (40) um eine Achse (43) schwenkbar ist, die senkrecht zu einer Bewegungsrichtung des aus der Patrone ragenden Filmstreifens verläuft.

6. Kamera nach Anspruch 1, **dadurch gekennzeichnet, dass** die Verriegelungseinrichtung (50) einen Riegel (59) aufweist, mit dem der aus der Patrone ragende Filmstreifen in Berührung bringbar ist, um einen Abschnitt der Verriegelungseinrichtung in eine Bewegungsbahn des Bewegungsmittels (40) zu bringen und dadurch dessen Bewegung einzuschränken und zu verhindern, dass sich die Lichtsperre von ihrer offenen in ihre geschlossene Stellung bewegt.

7. Kamera nach Anspruch 6, **dadurch gekennzeichnet, dass** die Verriegelungseinrichtung (50) derart angeordnet ist, dass sie um eine parallel zu einer Bewegungsrichtung des aus der Patrone ragenden Filmstreifens verlaufenden Achse (54) schwenkbar ist.

## Revendications

1. Appareil de prise de vues comprenant une chambre (22) destinée à recevoir une cartouche comportant un dispositif de protection contre la lumière, mobile entre une position ouverte permettant qu'une bande de film (14) sorte de la cartouche et une position fermée scellant la cartouche d'une manière étanche à la lumière, et un moyen (40, 80) destiné à déplacer ledit dispositif de protection contre la lumière entre ses positions ouverte et fermée, **caractérisé par**
un moyen de blocage (50) sensible à ladite bande de film (14) qui est présente dans un plan de film (90) adjacent à ladite chambre (22), destiné à empêcher ledit moyen mobile (40) de déplacer ledit dispositif de protection contre la lumière depuis ladite position ouverte vers ladite position fermée lorsque ladite bande de film fait saillie de la cartouche, en empêchant ainsi ledit dispositif de protection contre la lumière de se fermer sur la bande de film et d'endommager éventuellement le film.

2. Appareil de prise de vues selon la revendication 1, dans lequel ledit moyen mobile comprend un dispositif d'entraînement de dispositif de protection contre la lumière (80) destiné à mettre en prise et déplacer le dispositif de protection contre la lumière entre les positions ouverte et fermée, un élément d'entraînement (40) destiné à mettre en prise et déplacer le dispositif d'entraînement de dispositif de protection contre la lumière (80) pour déplacer le dispositif de protection contre la lumière, et un actionneur (30) pouvant être mis en oeuvre manuellement destiné à mettre en prise et à déplacer l'élément d'entraînement

3. Appareil de prise de vues selon la revendication 2, dans lequel ledit moyen de blocage (50) peut se mettre en prise avec ledit élément d'entraînement (40) lorsque ladite bande de film fait saillie de ladite cartouche pour limiter le déplacement dudit élément d'entraînement afin d'empêcher le déplacement du dispositif de protection contre la lumière depuis la position ouverte vers la position fermée.

4. Appareil de prise de vues selon la revendication 3, dans lequel ledit moyen de blocage (50) comprend un élément de blocage (59) qui est mis en contact avec ladite bande de film faisant saillie depuis ladite cartouche afin de déplacer une partie (56) dudit moyen de blocage dans une ouverture (46) dudit élément d'entraînement (40) pour limiter le déplacement dudit élément d'entraînement.

5. Appareil de prise de vues selon la revendication 3, dans lequel ledit élément d'entraînement (40) peut pivoter autour d'un axe (43) qui est perpendiculaire à une direction de déplacement de ladite bande de film faisant saillie.

6. Appareil de prise de vues selon la revendication 1, dans lequel ledit moyen de blocage (50) comprend un élément de blocage (59) qui est mis en contact avec ladite bande de film faisant saillie de ladite cartouche afin de déplacer une partie dudit moyen de blocage suivant un trajet de déplacement dudit moyen mobile (40) afin de limiter le déplacement dudit moyen mobile pour empêcher ledit dispositif de protection contre la lumière de se déplacer de ladite position ouverte vers ladite position fermée.

7. Appareil de prise de vues selon la revendication 6, dans lequel ledit moyen de blocage (50) est agencé pour pivoter autour d'un axe (54) qui est parallèle à une direction de déplacement de ladite bande de film faisant saillie.
